(19)

Europäisches
Patentamt
European
Patent Office
Office européen
des brevets

(11) **EP 1 983 478 A2**

(12) **EUROPEAN PATENT APPLICATION**

(43) Date of publication:
**22.10.2008 Bulletin 2008/43**

(51) Int Cl.:
**G06Q 10/00** (2006.01)

(21) Application number: **08150697.4**

(22) Date of filing: **28.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.01.2007 US 669349**

(71) Applicant: **Aspect Software Inc.**
**Westford, MA 01886 (US)**

(72) Inventor: **Lewis, Donald C.**
**Bell Buckle, TN 37020 (US)**

(74) Representative: **Wablat, Wolfgang**
**Patentanwalt**
**Dr. Dr. W. Wablat**
**Potsdamer Chaussee 48**
**14129 Berlin (DE)**

(54) **Method and system for matching resources and co-resources**

(57)  A method and apparatus are provided for matching resources and co-resources within a system. The method includes the steps of providing a plurality of resources and co-resources where a first type of resource of the plurality of resources are preferentially matched with a first type of co-resource of the plurality of co-resources and a second type of resource of the plurality of resources is preferentially matched with a second type of co-resource of the plurality of co-resources and where any match between a resource of the first type and a co-resource of the second type or a resource of the second type and co-resource of the first type is a non-preferential match, matching each of the plurality of resources with each respective co-resource of the plurality of co-resources, forming a tempered match from each matched resource and co-resource by associating a time of the match with the match, ordering the tempered matches based upon the associated time; and releasing at least some of the tempered matches for use within the system based upon the ordering of the tempered matches.

**Fig. 1**

**Description**

Background of the Invention

The invention relates to resources and co-resources and more particularly to methods of matching resources with co-resources.

Background of the Invention

Methods of matching information resources with information consumers are generally known. On a first level, a private party may have a question and look for a source of information to provide an answer to the question. The party may call an organization associated with the question or access a search engine (e.g., Google) through the Internet and enter the question. The search engine may search for information resources that may be capable of providing answers and return a list of contacts that may be able to answer the question. Typically, the contacts are identifiers of organizations that may be able to answer the question.

The party may call an organization identified by the search, an agent of the organization may answer the call and the agent may attempt to answer any questions arising from the call. If the agent cannot answer the question, then the agent will either place the client on hold to call someone else or get the client's number and promise to call him/her back when he/she has an answer.

On the same or another level, a member of an organization, in general, may have a question about operation of the organization. In this case, the member may simply begin to call other members of the organization. In some cases, the organization may have a telephone directory that is divided into departments. By knowing the general subject matter of a question, the member may simply begin to call members of a particular department until the calling member finds a suitable answer.

In any case, the process is haphazard and may have many dead ends. If members of a department do not have an answer to the question, the agent or member may call other departments or members of the organization. If the other department or members are busy or do not answer, the agent or member may simply go on to another department or member.

While the process of finding answers may be successful if the querying party is persistent enough, it is time consuming and inefficient. Accordingly, a need exists for a more efficient method of finding an information resource in a dynamic environment.

Summary

A method and apparatus are provided for matching resources and co-resources within a system. The method includes the steps of providing a plurality of resources and co-resources where a first type of resource of the plurality of resources are preferentially matched with a first type of co-resource of the plurality of co-resources and a second type of resource of the plurality of resources is preferentially matched with a second type of co-resource of the plurality of co-resources and where any match between a resource of the first type and a co-resource of the second type or a resource of the second type and co-resource of the first type is a non-preferential match, matching each of the plurality of resources with each respective co-resource of the plurality of co-resources, forming a tempered match from each matched resource and co-resource by associating a time of the match with the match, ordering the tempered matches based upon the associated time; and releasing at least some of the tempered matches for use within the system based upon the ordering of the tempered matches.

Brief Description of the Drawings

FIG. 1 depicts a system for matching resources and co-resources in accordance with an illustrated embodiment of the invention; and
FIGs. 2-8 depict signatures of matched resources and co-resources under various illustrated embodiments of FIG. 1.

Detailed Description of an Illustrated Embodiment

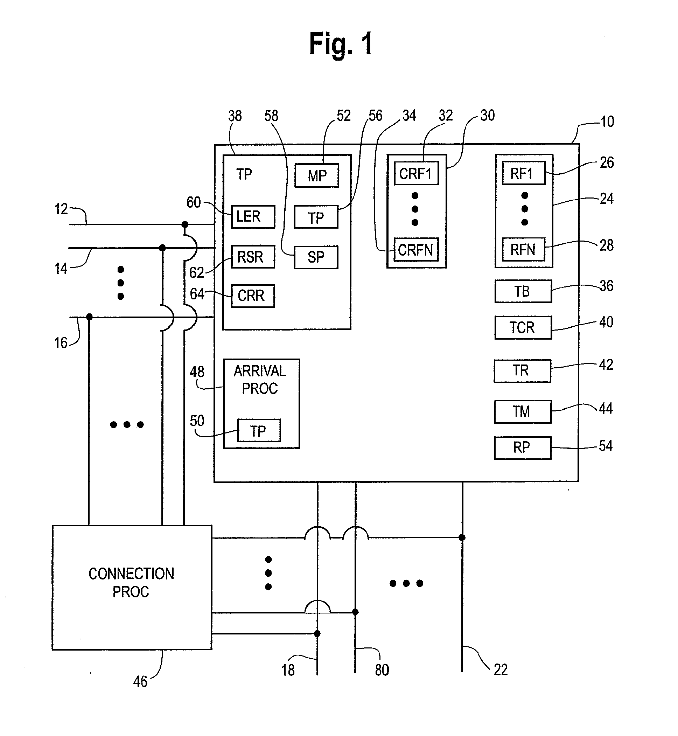

FIG. 1 is a simplified block diagram of a communication system 10 used for matching resources with co-resources. In one particular embodiment, a resource and co-resource are both persons of the same organization. In another embodiment, the resource may be a member of an organization and the co-resource may be a client of the organization or an employee of a client of the organization.

A profile may be associated with each of the resources and co-resources. The profiles of a resource may be a knowledge profile and the profile of the co-resource may be an information needed profile.

The system 10 has many resources and co-resources. In order to perform its intended function, the system 10 matches the knowledge profiles of resources with the information needed profiles of the co-resources. It should be noted that within the organizational context, the persons occupying the role of resources and co-resources may reverse roles depending upon the context of a contact request.

In general, the system 10 matches resources with co-resources by comparing the knowledge profile of each resource and the information needed profile of each co-resource within the system 10 and forms a signature that reflects the quality of the match. The system 10 operates dynamically in real time because only some of the resources and co-resources are present within the system 10 at any one instant. Higher quality matches may be released after only a very short predetermined time period (e.g., immediately) while poorer quality matches are allowed to remain within the system 10 for a longer predetermined period of time pending the possibility of the availability of a better match.

Release of a match in this case means that the resource and co-resource are placed into communication contact with each other. Contact may occur either automatically via a computer used for that purpose or manually by transmittal of a communication system identifier to one of the resource and the co-resource and the receiving party initiating contact with the other party.

The knowledge profile of each resource may be provided to and saved within the system 10 on a permanent or semi-permanent basis. The knowledge profile may be provided to the system 10 under a predefined format by a supervisor who enters specific information about the resource or the knowledge profile may be provided under an undefined format as descriptive information about the resource that is stored within the system 10. In the case of textual descriptive information, word searching may be used to match the knowledge profile with an information need profile.

The knowledge needed profile of each co-resource may be partially provided within the system 10 (in advance of use) and augmented as needed for each contact between a resource and co-resource. For example, where the resources and co-resources are all employees of an organization, a contact request from a co-resource may be augmented by a specific question provided by the co-resource through a computer terminal connected to the system 10. The specific question from the co-resource may be combined with a knowledge profile of the co-resource to form an overall context of the knowledge needed profile from the co-resource for contact with a resource. A contact formed from a knowledge needed profile formed in this manner may be used to form a higher quality match between the co-resource and one of the resources. A communication connection between a released match between a resource and co-resource may established through use of a connection processor within the communication system 10.

Under another illustrated embodiment, the resources may be agents of an organization and the co-resources may be clients of the organization. In this regard, FIG. 1 shows a number of resources (e.g., agents of the organization) 18, 20, 22 with co-resources (e.g., clients of the organization) 12, 14, 16. The connection processor 46 may operate under any appropriate technology (e.g., telephone, VoIP, e-mail, chat, etc.).

For purposes of simplicity, it will be assumed that a first memory 24 contains a list of knowledge profiles (e.g., qualifications) of resources 18, 20, 22. In this regard, it will be assumed that a respective knowledge profile file 26, 28 is provided for each resource 18, 20, 22.

Similarly, it may be assumed that a second memory 30 is provided with is list of co-resource knowledge needed profiles located in files 32, 34. In this regard, it will be assumed that a respective co-resource knowledge needed file 32, 34 is provided that describes the needs of each co-resource 12, 14, 16. The needs of the co-resources 12, 14, 16 may be determined conventionally from call associated information (e.g., ANI for PSTN calls, web pages visited for internet calls, etc.). For example, it may be deduced that a call originating from a web page would have a question that has to do with the web page. The needs of co-resources 12, 14, 16 may be further augmented by information retrieved from client files based upon the identity of the co-resource.

Turning first to terminology, an explanation will be provided of the terms used herein. Following an explanation of terms, an explanation will be provided of various illustrated embodiments of the invention.

As used herein, a source is either a resource (r) 18, 20, 22 or a co-resource (c) 12, 14, 16. A tempered resource $(r,t)$ is a resource (r) with an associated absolute time value (t). A tempered co-resource $(c,t)$ is a co-resource (c) with an associated absolute time value (t).

In general, sources arrive from outside the system 10 and are detected by an arrival processor 48. When a resource 18, 20, 22 or co-resource 12, 14, 16 arrives, it is available. When either type of source arrives, it is tempered by operation of a first source tempering processor 50 that pairs the source with the absolute time (t) of its arrival from a time base 36. Once a source 12, 14, 16, 18, 20, 22 is paired with an absolute time (e.g., $(r,t_r)$ or $(c,t_c)$), the source is "inside" the system 10.

The concept of a tempered match will be considered next. A tempered match $((r,t_r), (c,t_c), t_m)$ has three elements, including a tempered co-resource $(c,t_c)$, a tempered resource $(r,t_r)$ and an absolute time $(t_m)$. The absolute time of the tempered match is the time the match is/was/may be/shall be established. The tempered match is real if $t_m \geq t_c$ and $t_m \geq t_r$.

A tempered match that is not real is a virtual tempered match.

Tempered matches are formed from the tempered sources within the system 10. A tempered match may leave the system 10. In this case, the match is sent outside the system 10 when the match is released. The match is released either directly to one or both of the resource and co-resource who complete the call manually or to a connection processor 46 that automatically establishes a communication connection between the resource and co-resource.

The system 10 has a tempo function, T, that is performed by a tempo processor 38, which maps any pair formed from a tempered co-resource $(c, t_c)$ and a tempered resource $(r, t_r)$ to a tempered match. The mapping process may use a matching processor 52 to first match the tempered co-resource $(c, t_c)$ with the tempered resource $(r, t_r)$. A tempering processor 56 may then create the tempered match by appending the absolute time $(t_m)$ to the match. The process of creating a tempered match may be depicted by the expression as follows.

$$T: ((c, t_c), (r, t_r) +\rightarrow ((c, t_c), (r, t_r), t_m).$$

In other words, the tempo processor 38 uses the tempered sources to establish a tempered match.

An ordering processor 60 may adjust the absolute time to form an adjusted associated time. A release processor 54 may release the tempered matches for use within the system based upon the ordering of the tempered matches.

Inside the system 10 are three lists: 1) a list 40 of tempered co-resources, sorted by time of arrival; 2) a list 42 of tempered resources, sorted by time of arrival and 3) a list of tempered matches, sorted by time of establishment of the match. Each tempered source appears, at most, one time in its source list. Each tempered source may appear many times in the list of tempered matches, but any particular tempered co-resource and tempered resource pair will be established together in at most one match in the list of tempered resources.

The processing elements of the system 10 may insert appropriate items into any of the three lists 40, 42, 44. The system 10 may also delete appropriate items from any of the three lists 40, 42, 44. The system 10 may also sort items within any of the three lists 40, 42, 44.

A release processor 54 of the system 10 may remove tempered matches from the list of tempered matches 44 and release them outside the system 10. In real time, the system 10 runs the matching processor 52 creates tempered matches and the release processor 54 releases them to the outside. The process may include three sets of process flows accomplished by respective subroutines. As part of the first process flow accomplished by a list editor routine 60, whenever a tempered match, M, in the list of tempered matches is established at a time equal to or before the current time, the lists are edited in accordance with the match. First, any tempered match, other than M, whose co-resource is the same as M's, is deleted from the list of tempered matches. Second, any tempered match other than M, whose resource is the same as M's, is deleted from the list of tempered matches. Third, any tempered co-resource, whose co-resource is the same as M's, is deleted from the list of co-resources. Fourth, any tempered resource, whose resource is the same as M's, is deleted from the list of resources. Fifth, M is removed from the list of tempered matches and released to the outside either via operation of the release processor 54 or by operation of the release processor 54 in conjunction with the list editor routine 60.

As part of the second process flow accomplished by a resource routine 62, the lists 40, 42, 44 are edited whenever a new tempered resource, R, arrives. As a first step, the tempo processor 38 forms a new tempered match from R and every co-resource, C, in the list of co-resources 40. Each such tempered match is inserted into the list of tempered matches 44. R is then inserted into the list of resources 42.

As part of a third process flow accomplished by a co-resource routine 64, the lists 40, 42, 44 are edited whenever a new tempered co-resource, C, arrives. As a first step, the tempo processor 38 forms a new tempered match from C and every resource, R, in the list of resources 42. Each such tempered match is inserted into the list of tempered matches 44. C is then inserted into the list of co-resources 40.

The tempo processor 38 schedules these three process flows so that at any moment only one of these activities is underway and so that for any M, R or C, the activity runs to completion before a new process flow begins. The reader should note that the list of tempered matches 44 is not a queue but a kind of temporary (and dynamic) release schedule for tempered matches.

The tempo processor 38 determines the pace at which particular tempered co-resources and tempered resources will be released from the system 10 as tempered matches. The process flows admit many refinements. For example, the second and third process flows can include their own release and cleanup activities when they discover that a new tempered match has been established at a time before a current time.

In general, a signature processor 58 within the tempo processor 38 characterizes the quality of a match between a co-resource and a resource by associating larger values of $t_m$ with poorer matches. Better matches have a sense of urgency and are associated with smaller values of $t_m$.

In effect, the signature processor 58 adjusts (increments) the value of $t_m$ by a predetermined value that is determined from the characteristics of the resource and co-resource. The predetermined value may be calculated from the differences of arrival times of the resource and co-resource. Alternatively, the predetermined value may be selected based upon the type of resource and co-resource forming the match.

The design and use of the tempo processor 38 is based upon two assumptions. First, a decision as to whether or not a particular match is suitable at a particular time depends upon how long the resource and co-resource have been waiting for some match. (This is the dynamic assumption.) Second, it is better to wait a small amount of time when there is a chance that a more suitable match will arrive in the interim than to make a poor match against a resource or co-resource simply because it is immediately available. (This is the Stochastic assumption.)

The tempo process of the tempo processor 38 in providing tempered matches is regular if it only returns real tempered matches. If a tempo process is not regular, it is irregular.

The tempo, T, of producing tempered matches is autonomous when for any times $t_r$, $t_c$, $t_m$, and any time interval h, and for any co-resource c and resource r, the following conditions are true.

$$\text{If } T: ((c, t_c), (r, t_r))+ \rightarrow ((c, t_c),(r, t_r)), t_m,$$

then

$$T: ((c, t_c+h), (r, t_r+h))+ \rightarrow ((c, t_c+h),(r, t_r+h)), t_m+h.$$

That is, a shift in the arrival times of the co-resource and resource results in the same shift in the time the match was established.

If T is an autonomous process, then there is a function, f, parameterized by co-resources and resources, and mapping time intervals to time intervals described by the expression f[c,r]:h+$\rightarrow$h', such that

$$T: ((c, t_c), (r, t_r))+ \rightarrow ((c, t_c),(r, t_r), t_c+f[c,r]( t_c-t_r)) \text{ when } t_c \geq t_r$$

and

$$T: ((c, t_c), (r, t_r))+ \rightarrow ((c, t_c),(r, t_r), t_r+f[c,r]( t_c-t_r)) \text{ when } t_r > t_c.$$

Furthermore, if an autonomous tempo is regular, then f[c,r] is non-negative, for all c and r.

The function, f, is related to the autonomous tempo of the tempo processor 38 is called the signature of the tempo (match). The signature of the match is a measure of the quality of the match. The quality of the match may be determined by matching the attributes of the resource and co-resource. The quality of the match is used to control the release of the tempered match. The signature of the match is used by the signature processor 58 to adjust the value $t_m$.

When considering signatures, the source that arrives later (whether resource or co-resource) establishes the match, since (1) the duration returned by the signature is added to the arrival time of the later source is determined when the match is established and (2) no real tempered match can be established until after the arrival of the later source.

Following are a number of examples. In the following examples, the time interval, h, is defined as $h=t_c- t_r$, so that h is positive when the co-resource arrives after the resource, and h is negative when the resource arrives after the co-resource.

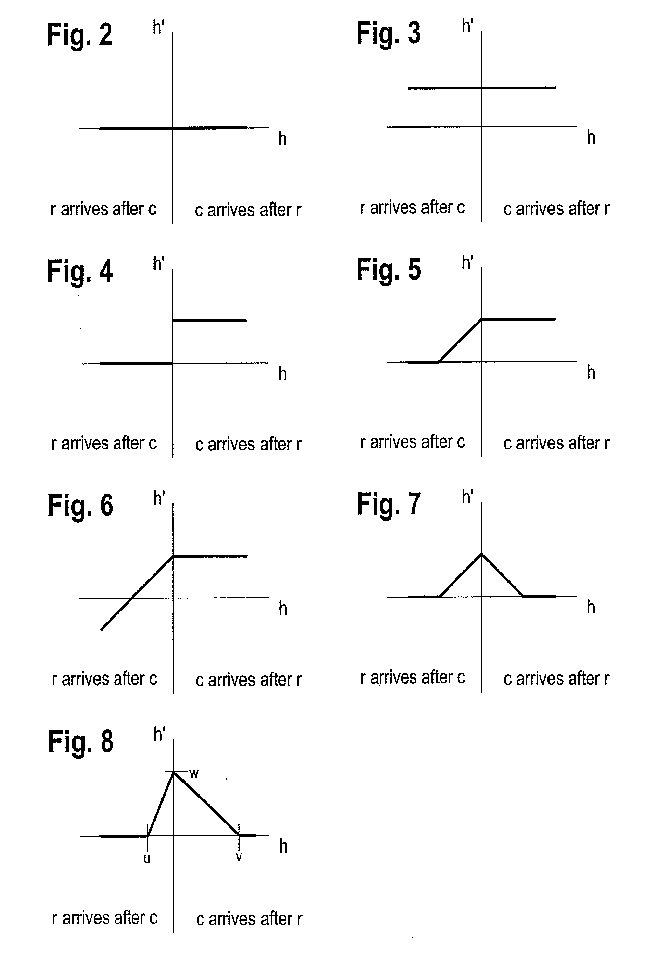

As a first example, suppose that f[c,r]: h+$\rightarrow$0 (FIG. 2). In this case, the match is established whenever the later of c and r arrives. The match is immediately ready for release.

As another example, suppose that f[c,r]: h+$\rightarrow$∞. In this case, the match is established arbitrarily far into the future and the match is never available for release.

As still another example, suppose that f[c,r]: h+$\rightarrow$1 (FIG. 3). In this case, the match is established one time unit after the later of c and r arrives. The match will be ready for release within one time unit, provided one of the sources is not released prior to the elapse of one time unit (as part of a different match).

As another example, assume that the signatures take the following values (FIG. 4).

$$f[c,r]: h+ \rightarrow 1, \text{ when } h \geq 0$$

and

$$f[c,r]: h+ \rightarrow 0, \text{ when } h < 0.$$

If the co-resource arrives after the resource, the match is established one time unit after the arrival time of the co-resource. In other words, it's as if the co-resource is willing to wait for a better match. If the resource arrives after the co-resource, then the match is established at the arrival time of the resource and the match is immediately ready for release. In other words, it's as if the resource knows a better match for it will near come along and so it immediately matches with the co-resource. This behavior overrides the co-resources "strategy" of waiting for a better match.
As another example, assume that the signatures take the following values (FIG. 5).

$$f[c,r]: h+ \rightarrow 1, \text{ when } h \geq 0,$$

$$f[c,r]: h+ \rightarrow 1+h, \text{ when } -1 < h < 0$$

and

$$f[c,r]: h+ \rightarrow 0, \text{ when } h \leq -1.$$

In this case, if the co-resource arrives after the resource, the match is established one time unit after the arrival time of the co-resource. In other words, it's as if the co-resource is willing to wait for a better match. If the resource arrives within one time unit after the co-resource, the match is established at the time it would have been established if the resource were already present when the co-resource arrived. If the resource arrives more than one time unit after the co-resource, the match is established at the arrival time of the resource and the match is ready for release. This function creates real tempered matches.
As another example, assume that the signatures take the following values (FIG. 6).

$$f[c,r]: h+ \rightarrow 1, \text{ when } h \geq 0,$$

$$f[c,r]: h+ \rightarrow 1+h, \text{ when } h \leq -1.$$

If the co-resource arrives after the resource, the match is established one time unit after the arrival time of the co-resource. In other words, it's as if the co-resource is willing to wait for a better match. If the resource arrives after the co-resource, the match is established at the time it would have been established if the resource were already present when the co-resource arrived. This function creates both real and virtual tempered matches. In particular if the resource arrives more than one time unit after the co-resource, the match is not real because it is established before the arrival of the resource. Therefore this function defines an irregular tempo.
As another example, assume that the signatures take the following values (FIG. 7).

$$f[c,r]: h+ \rightarrow 0, \text{ when } h \geq 1,$$

$$f[c,r]: h+\rightarrow 1-h, \text{ when } 0<h<1,$$

$$f[c,r]: h+\rightarrow 1+h, \text{ when } -1<h<0$$

and

$$f[c,r]: h+\rightarrow 0, \text{ when } h\leq -1.$$

When the two sources arrive within one time unit of each other, the match is established one time unit after the earlier member (either c or r) of the pair arrived. Otherwise, the match is established when the later member of the pair arrives.

Consider the triangular signature, f[c,r], for the tempo T shown in FIG. 8. Here, v>0, w>0, u<0, and the signature is defined as follows.

$$f[c,r]: h+\rightarrow 0, \text{ when } h\geq v,$$

$$f[c,r]: h+\rightarrow (1-h/v)w, \text{ when } 0<h<v,$$

$$f[c,r]: h+\rightarrow (1-h/u), \text{ when } u<h\leq 0$$

and

$$f[c,r]: h+\rightarrow 0, \text{ when } h\leq u.$$

For this signature, w is the maximum delay a source will add to its time of arrival to determine the time a match is established. This maximum is used only if the resource and co-resource arrive simultaneously.

If the co-resource arrives after the resource, the co-resource establishes the match after some delay less than w. There are three qualitatively different behaviors, depending upon the ratio of w and v.

First consider |w/v|=1. When the co-resource arrives within |v| time units of the arrival of the resource, the match is established exactly w time units after the arrival of the resource. When the co-resource arrives after |v| time units of the arrival of the resource, the match is immediately established.

Next consider |w/v|1. When the co-resource arrives within |v| time units after the arrival of the resource, the match is established more than w time units after the arrival of the resource. When the co-resource arrives after |v| time units of the arrival of the resource, the match is immediately established.

Finally consider |w/v|>1. When the co-resource arrives within |v| time units after the arrival of the resource, the match is established less than w time units after the arrival of the resource. When the co-resource arrives after |v| time units of the arrival of the resource, the match is immediately established.

If the resource arrives after the co-resource, the resource establishes the match after some delay less than w. There are three qualitatively different behaviors, depending upon the ratio of w and u.

First consider |w/u|=1. When the resource arrives within |u| time units of the arrival of the co-resource, the match is established exactly w time units after the arrival of the co-resource. When the resource arrives after |u| time units of the arrival of the co-resource, the match is immediately established.

Next consider |w/u|<1. When the resource arrives within |u| time units after the arrival of the co-resource, the match is established more than w time units after the arrival of the co-resource. When the resource arrives after |u| time units of the arrival of the co-resource, the match is immediately established.

Finally consider |w/u|>1. When the resource arrives within |u| time units of the arrival of the co-resource, the match is established less than w time units after the arrival of the co-resource. When the resource arrives after |u| time units of the arrival of the co-resource, the match is immediately established.

Following are three detailed examples illustrating the use of tempered matching in cases involving two types of resources and two types of co-resources. These examples easily generalize, in any number of ways, to cases involving many resources and many co-resources. Each of the three examples involves an autonomous tempo. The essential distinction between the examples is due to a different choice of signature for their tempos. The first of these examples involves a very simple "constant preference" signature which establishes a time of match between preferred matches at the current time and establishes a time of match between less preferred matches at a fixed time interval after the current time. The second of these examples illustrates a generalization of a "first come, first matched" policy. The third of these examples is an "exponential" variation of the previous two examples. This example describes a non-trivial autonomous tempo whose signature enforces a significant and useful matching policy where the time a match is established for less preferred matches is delayed by a variable amount depending on how long a source (resource or co-resource) has been waiting in the system. As well, this virtual tempo is designed so that any source will eventually be released, provided co-sources of any type continue to arrive. Here follows the first and most detailed of these three examples.

Example 1. Shown first is a table of source arrival data and a table of release data for a tempered matching example in a simple scenario.

Following the tables there are charts that illustrate the detailed steps of the first matches in the example scenario.

This example scenario can be thought to represent the following situation. The resources represent customer service agents. The co-resources represent customers. Suppose there are two kinds of agents, r1 and r2, and two kinds of customers, c1 and c2, so that there are four (possibly distinct types of) *signatures* for a *real autonomous tempo:* f[c1,r1], f[c1,r2], f[c2,r1], and f[c2,r2]. Suppose the agent skills and the customer requirements are such that any type of agent can handle any type of customer, but for some other business reason (say profit or customer satisfaction) it is better to match r1 with c1 and r2 with c2, even if it entails some delay, than to match r1 with c2 and r2 with c1. The choice of the four *signatures* quantifies the quality of the possible matches by specifying the amount of acceptable delay before *releasing* a matched customer-agent pair.

In this example, a set of very simple signatures have been chosen as follows.

$$f[c1,r1]\,(h) = 0;$$

$$f[c2,r2]\,(h) = 0;$$

$$f[c1,r2)\,(h) = 1;$$

$$f[c2,r1]\,(h) = 1;$$

The scenario can be described as including the following assumptions. There are two types of resources, {r1, r2}, and two types of co-resources, {c1, c1}. The *tempo* of the matching process establishes a match between either c1 and r1 or c2 and r2 at the current time (i.e., the arrival time of the later member of either pair) and establishes a match between c1 and r2 or c2 and r1 at the current *time plus* one.

The arrival times of resources and co-resources are determined by some stochastic process. In this example, each type of resource and co-resource is assumed to follow an exponential distribution with mean =1. That is, for each of the four types, the distribution of time-intervals between consecutive arrivals is given by the density p(t)dt = exp(-t) dt.

Following is a list of a sample of 100 consecutive arrival times generated by a Monte Carlo method using those assumptions. The time of arrival is on the left and the type of *source* is identified on the right.

| Arrival time | Source type |
| --- | --- |
| 0.0028457 | c1 |
| 0.176479 | c1 |

(continued)

| Arrival time | Source type |
| --- | --- |
| 0.4319778 | r1 |
| 0.5342334 | r1 |
| 0.5490368 | r2 |
| 0.925951 | c1 |
| 1.5244499 | r2 |
| 1.6745056 | r1 |
| 2.1345255 | r2 |
| 2.3149199 | r1 |
| 2.5325145 | r2 |
| 2.8617355 | c1 |
| 2.993211 | r1 |
| 3.453786 | r2 |
| 4.3641178 | r2 |
| 4.8033558 | c2 |
| 4.8334326 | r1 |
| 4.8526482 | c2 |
| 5.0166638 | c2 |
| 5.0866341 | r2 |
| 5.6643754 | r1 |
| 6.9911683 | r2 |
| 8.1413418 | c2 |
| 8.2544844 | c2 |
| 8.4116555 | c2 |
| 8.4777979 | r1 |
| 8.6265853 | r2 |
| 8.8377463 | c1 |
| 8.8591858 | r1 |
| 8.8638217 | r2 |
| 9.2137182 | r1 |
| 9.3664004 | c2 |
| 9.6601721 | c2 |
| 9.7568613 | c2 |
| 10.110442 | r2 |
| 11.079883 | r1 |
| 11.114974 | r2 |
| 11.311129 | c2 |
| 11.670576 | r2 |
| 11.762021 | c1 |
| 11.797395 | c1 |
| 12.385823 | c1 |
| 12.741517 | c1 |
| 13.085044 | r2 |
| 13.239032 | c2 |
| 13.332216 | c2 |
| 13.595494 | r2 |
| 14.252947 | r1 |
| 14.379489 | c1 |
| 14.656779 | c2 |
| 15.147636 | r1 |
| 15.24958 | c2 |

**9**

(continued)

| Arrival time | Source type |
| --- | --- |
| 15.32262 | r2 |
| 15.327979 | r1 |
| 15.34806 | c2 |
| 15.525547 | r1 |
| 16.000447 | r1 |
| 16.657029 | r1 |
| 17.752741 | r1 |
| 17.8907 | r2 |
| 18.028345 | r2 |
| 18.052368 | c1 |
| 18.065309 | c2 |
| 18.322691 | r2 |
| 18.518349 | r2 |
| 18.769522 | r1 |
| 19.123789 | c1 |
| 19.243576 | c2 |
| 19.816374 | r2 |
| 20.145829 | c1 |
| 20.960878 | r1 |
| 21.660417 | r1 |
| 23.038336 | r2 |
| 23.181726 | c2 |
| 23.302044 | c2 |
| 23.623127 | c1 |
| 23.635823 | c1 |
| 23.651783 | r2 |
| 24.146409 | c2 |
| 24.921685 | r2 |
| 25.043273 | c2 |
| 25.097191 | c2 |
| 25.117477 | c2 |
| 25.221545 | c2 |
| 25.521841 | r1 |
| 25.876956 | r2 |
| 25.884386 | r2 |
| 26.484502 | c2 |
| 26.662173 | c2 |
| 26.692425 | r2 |
| 26.883677 | c2 |
| 26.883804 | c2 |
| 27.218509 | r1 |
| 27.379464 | r1 |
| 27.812288 | r1 |
| 27.845896 | c1 |
| 27.935738 | c1 |
| 27.941248 | c2 |
| 28.35247 | c2 |
| 28.392165 | c1 |

A summary of tempered matching for the scenario presented for the samples above now follows. A tempered matching algorithm was run against this time sequence of source arrivals using the given tempo. Following is a table showing the times and types of the released matches, up to the time of the arrival of the 100th source. The last column indicates the quality of the match. In this example, only one match was of poor quality. A c2 was matched with an r1 and released.

| time of release | co-resource arrival time | co-resource type | resource arrival time | resource type | quality of match |
|---|---|---|---|---|---|
| 0.431977849 | 0.002845746 | c1 | 0.431977849 | r1 | 1 |
| 0.534233412 | 0.176479033 | c1 | 0.534233412 | r1 | 1 |
| 1.674505643 | 0.925951042 | c1 | 1.674505643 | r1 | 1 |
| 2.861735463 | 2.861735463 | c1 | 2.314919909 | r1 | 1 |
| 4.803355779 | 4.803355779 | c2 | 0.549036807 | r2 | 1 |
| 4.852648201 | 4.852648201 | c2 | 1.524449874 | r2 | 1 |
| 5.016663826 | 5.016663826 | c2 | 2.134525472 | r2 | 1 |
| 8.141341791 | 8.141341791 | c2 | 2.532514531 | r2 | 1 |
| 8.254484443 | 8.254484443 | c2 | 3.453786026 | r2 | 1 |
| 8.411655527 | 8.411655527 | c2 | 4.364117848 | r2 | 1 |
| 8.837746297 | 8.837746297 | c1 | 2.993211023 | r1 | 1 |
| 9.366400415 | 9.366400415 | c2 | 5.086634145 | r2 | 1 |
| 9.660172101 | 9.660172101 | c2 | 6.991168256 | r2 | 1 |
| 9.756861296 | 9.756861296 | c2 | 8.626585319 | r2 | 1 |
| 11.31112923 | 11.31112923 | c2 | 8.863821698 | r2 | 1 |
| 11.76202144 | 11.76202144 | c1 | 4.833432632 | r1 | 1 |
| 11.79739484 | 11.79739484 | c1 | 5.664375398 | r1 | 1 |
| 12.38582257 | 12.38582257 | c1 | 8.477797937 | r1 | 1 |
| 12.74151655 | 12.74151655 | c1 | 8.859185764 | r1 | 1 |
| 13.23903224 | 13.23903224 | c2 | 10.11044225 | r2 | 1 |
| 13.33221631 | 13.33221631 | c2 | 11.1149744 | r2 | 1 |
| 14.37948909 | 14.37948909 | c1 | 9.213718215 | r1 | 1 |
| 14.65677872 | 14.65677872 | c2 | 11.67057641 | r2 | 1 |
| 15.2495799 | 15.2495799 | c2 | 13.0850435 | r2 | 1 |
| 15.34806013 | 15.34806013 | c2 | 13.59549371 | r2 | 1 |
| 18.05236782 | 18.05236782 | c1 | 11.07988331 | r1 | 1 |
| 18.0653092 | 18.0653092 | c2 | 15.32262027 | r2 | 1 |
| 19.1237885 | 19.1237885 | c1 | 14.25294715 | r1 | 1 |
| 19.2435764 | 19.2435764 | c2 | 17.89069998 | r2 | 1 |
| 20.14582869 | 20.14582869 | c1 | 15.14763564 | r1 | 1 |
| 23.1817262 | 23.1817262 | c2 | 18.02834513 | r2 | 1 |
| 23.30204351 | 23.30204351 | c2 | 18.32269111 | r2 | 1 |
| 23.62312713 | 23.62312713 | c1 | 15.32797863 | r1 | 1 |
| 23.63582302 | 23.63582302 | c1 | 15.52554682 | r1 | 1 |
| 24.14640879 | 24.14640879 | c2 | 18.51834893 | r2 | 1 |
| 25.04327311 | 25.04327311 | c2 | 19.81637388 | r2 | 1 |
| 25.09719126 | 25.09719126 | c2 | 23.03833628 | r2 | 1 |
| 25.11747738 | 25.11747738 | c2 | 23.65178348 | r2 | 1 |
| 25.22154494 | 25.22154494 | c2 | 24.92168525 | r2 | 1 |
| 26.48450153 | 26.48450153 | c2 | 25.87695635 | r2 | 1 |
| 26.66217262 | 26.66217262 | c2 | 25.88438635 | r2 | 1 |
| 26.88367734 | 26.88367734 | c2 | 26.69242508 | r2 | 1 |
| 27.84589612 | 27.84589612 | c1 | 16.0004471 | r1 | 1 |
| 27.88380426 | 26.88380426 | c2 | 16.65702903 | r1 | 0 |
| 27.93573764 | 27.93573764 | c1 | 17.75274101 | r1 | 1 |
| 28.39216455 | 28.39216455 | c1 | 18.76952177 | r1 | 1 |

After the arrival of the 100th source, the following co-resources were still waiting in the system.

| Arrival time | Co-resource type |
|---|---|
| 27.941248 | c2 |
| 28.35247 | c2 |

After the arrival of the 100th source, the following resources were still waiting in the system.

| Arrival time | Resource type |
|---|---|
| 20.960878 | r1 |
| 21.660417 | r1 |
| 25.521841 | r1 |
| 27.218509 | r1 |
| 27.379464 | r1 |
| 27.812288 | r1 |

Below is a sequence of charts which illustrate the tempered matching process acting on the given sample sequence of sources. Each chart comprises five rectangles, including the center rectangle, the upper rectangle, the lower rectangle, the left rectangle, and the right rectangle, and have the following semantics. Sources arrive in the upper rectangle. Tempered matches are released in the lower rectangle. The co-resources in the *system* are shown in the left rectangle. The resources in the *system* are shown in the right rectangle. The tempered matches in the *system* are shown in the center rectangle. Each source is represented by its arrival time and a type identifier (Here, one of r1, r2, c1, or c2.) Each tempered match is represented by the time of its establishment (as determined by the *tempo* of the matching process) followed by the representations of the co-resource and resource the match comprises.

A more detailed description of the match releases in the sample is as follows. The first source arrives at time = .0028457. It is a co-resource of type c1.

0.0028457    c1

The first co-resource immediately enters the system and becomes *available.* No matches are possible because there are no resources in the system. The next source, another co-resource, arrives at time = 0.176479.

0.176479   c1

0.0028457   c1

The second co-resource enters the system and then a resource of type r1 arrives at time = 0.4319778.

0.4319778   r1

0.0028457   c1
0.176479   c1

The resource immediately enters the system, and all possible co-resource/resource matches are tempered and ordered by time of establishment and time of arrival. (These matches appear in the center rectangle.)

|  | 0.431978  0.002846  c1  0.4319778  r1 |  |
| 0.0028457  c1 | 0.431978  0.176479  c1  0.4319778  r1 | 0.4319778  r1 |
| 0.176479  c1 |  |  |

The current time, 0.431978, is now greater than or equal to the time of establishment, 0.431978, of the tempered match at the top of the list of tempered matches in the center rectangle. That match is released and the co-resource and resource associated with that match are cleared from the system. Similarly, any tempered matches involving either of those sources are cleared from the system. The next source, a resource of type r1, arrives at time=0.5342334.

|  | 0.5342334  r1 |  |
| 0.176479  c1 |  |  |
|  | 0.431978  0.002846  c1  0.4319778  r1 |  |

The new resource is taken in to the system and tempered against the remaining co-resource. The current time, 0.5342334, is now greater than or equal to the time of establishment, 0.5342334, of the tempered match at the top of the list of tempered matches.

| | | |
|---|---|---|
| 0.176479  c1 | 0.534233  0.176479  c1  0.5342334  r1 | 0.5342334  r1 |

So that match is released and the co-resource and resource associated with that match are cleared from the system. Another resource arrives at time = 0.5490368.

| | | |
|---|---|---|
| | 0.5490368  r2 | |
| | 0.534233  0.176479  c1  0.5342334  r1 | |

That resource is taken into the system and a co-resource arrives at time = 0.925951.

| | |
|---|---|
| 0.925951   c1 | |
| | 0.5490368   r2 |

All matches are tempered. In this case the only match available has been established at a time = 1.925951, which is greater than the current time = 0.925951. (The tempo establishes the match between c1 and r2 one time unit after the arrival of c1.)

| | | |
|---|---|---|
| 0.925951   c1 | 1.925951   0.925951   c1   0.5490368   r2 | 0.5490368   r2 |

The next source arrives at time = 1.5244499. It is a resource of type r2. Upon this arrival, the current time =1.5244499 is less then the established time of the top match in the center rectangle. Therefore, no tempered match is released at the current time.

| 0.925951 c1 | 1.5244499 r2 | 0.5490368 r2 |
| | 1.925951 0.925951 c1 0.5490368 r2 | |

The resource is taken into the system. It is tempered against all the available co-resources in the system and any new tempered matches are inserted into the list of tempered matches.

| 0.925951 c1 | 1.925951 0.925951 c1 0.5490368 r2 | 0.5490368 r2 |
| | 2.5244499 0.925951 c1 1.5244499 r2 | 1.5244499 r2 |

The next source arrives at time = 1.6745056. It is a resource of type r2. Upon this arrival, the current time =1.6745056 is less then the established time of the top match in the center rectangle. Therefore, no tempered match is released at the current time.

| | | |
|---|---|---|
| | 1.6745056   r1 | |
| 0.925951   c1 | 1.925951   0.925951   c1   0.5490368   r2<br>2.5244499   0.925951   c1   1.5244499   r2 | 0.5490368   r2<br>1.5244499   r2 |

The resource is taken into the system. It is tempered against all the available co-resources in the system and any new tempered matches are inserted into the list of tempered matches.

| | | |
|---|---|---|
| | | |
| 0.925951   c1 | 1.6745056   0.925951   c1   1.6745056   r1<br>1.925951   0.925951   c1   0.5490368   r2<br>2.5244499   0.925951   c1   1.5244499   r2 | 0.5490368   r2<br>1.5244499   r2<br>1.6745056   r1 |

Before the next source arrives at time = 2.1345255, the current time reaches 1.6745056. The current time is then greater than or equal to the established time of the top match in the system, so that match is released, and that match's co-resource and resource are cleared form the system. At time = 2.1345255 the next source arrives.

```
                        2.1345255   r2


                                                    0.5490368   r2
                                                    1.5244499   r2
```

```
        1.6745056   0.925951   c1   1.6745056   r1
```

That source, a resource of type r1 enters the system, but no matches are possible because there are no co-resources currently in the system.

```

                                                    0.5490368   r2
                                                    1.5244499   r2
                                                    2.1345255   r2
```

Two more resources arrive before a co-resource arrives at time =2.8617355.

| | | | |
|---|---|---|---|
| 2.8617355   c1 | | | |

| | | | | | |
|---|---|---|---|---|---|
| | | | 0.5490368   r2 | | |
| | | | 1.5244499   r2 | | |
| | | | 2.1345255   r2 | | |
| | | | 2.3149199   r1 | | |
| | | | 2.5325145   r2 | | |

That co-resource, of type c1, immediately becomes available and is tempered against all available resources. The tempo establishes the current time in any matches against resources of type r1 and the current time + 1 in any matches against resources of type r2.

| 2.8617355   c1 | 2.8617355   2.8617355   c1   2.3149199   r1 | 0.5490368   r2 |
|---|---|---|
| | 3.8617355   2.8617355   c1   0.5490368   r2 | 1.5244499   r2 |
| | 3.8617355   2.8617355   c1   1.5244499   r2 | 2.1345255   r2 |
| | 3.8617355   2.8617355   c1   2.1345255   r2 | 2.3149199   r1 |
| | 3.8617355   2.8617355   c1   2.5325145   r2 | 2.5325145   r2 |

The tempered match against the resource arriving at 2.3149199 is at the top of the list of current matches and the time of that matches establishment is less than or equal to the current time. Therefore that match is released, and its sources are cleared from the system. The next source, a re-source of type r1, arrives at time = 2.993211

2.993211  r1

0.5490368  r2
1.5244499  r2
2.1345255  r2
2.5325145  r2

2.8617355   2.8617355  c1   2.3149199  r1

The resource is taken into the system, but no matches are currently possible. A co-resource then arrives at time= 4.8033558.

4.8033558  c2

0.5490368  r2
1.5244499  r2
2.1345255  r2
2.5325145  r2
2.993211  r1
3.453786  r2
4.3641178  r2

The co-resource is taken into the system and tempered against all available resources.

| | | | | | | | | |
|---|---|---|---|---|---|---|---|---|
| 4.8033558 | c2 | | 4.8033558 | 4.8033558 | c2 | 0.5490368 | r2 | 0.5490368 r2 |
| | | | 4.8033558 | 4.8033558 | c2 | 1.5244499 | r2 | 1.5244499 r2 |
| | | | 4.8033558 | 4.8033558 | c2 | 2.1345255 | r2 | 2.1345255 r2 |
| | | | 4.8033558 | 4.8033558 | c2 | 2.5325145 | r2 | 2.5325145 r2 |
| | | | 4.8033558 | 4.8033558 | c2 | 3.453786 | r2 | 2.993211 r1 |
| | | | 4.8033558 | 4.8033558 | c2 | 3.993211 | r1 | 3.453786 r2 |
| | | | 4.8033558 | 4.8033558 | c2 | 4.3641178 | r2 | 4.3641178 r2 |

The top match is established at the current time, so it is released, its sources cleared, and a new source arrives at time = 4.8334326.

| 4.8334326 r1 | | |
|---|---|---|
| | | 1.5244499 r2 |
| | | 2.1345255 r2 |
| | | 2.5325145 r2 |
| | | 2.993211 r1 |
| | | 3.453786 r2 |
| | | 4.3641178 r2 |
| 4.8033558 4.8033558 c2 0.5490368 r2 | | |

However, the source arriving at time=4,8334325 is a resource r1, so no match is possible.

```
4.8526482    c2
                                                  1.5244499    r2
                                                  2.1345255    r2
                                                  2.5325145    r2
                                                   2.993211    r1
                                                   3.453786    r2
                                                  4.3641178    r2
                                                  4.8334326    r1
```

Another co-resource arrives at time=4.8526482.

```
5.0166638    c2
                                                  2.1345255    r2
                                                  2.5325145    r2
                                                   2.993211    r1
                                                   3.453786    r2
                                                  4.3641178    r2
                                                  4.8334326    r1

          4.8526482    4.8526482    c2    1.5244499    r2
```

The co-resource at time=4.8526482 is matched with the resource at time=1. 5244499. Since the current time is equal to or less than time=4.8526482, the match is released from the system. Another co-resource c2 arrives at time=5.0166638.

```
                    8.1413418   c2

                                              2.5325145   r2
                                              2.993211    r1
                                              3.453786    r2
                                              4.3641178   r2
                                              4.8334326   r1
                                              5.0866341   r2
                                              5.6643754   r1
                                              6.9911683   r2



        5.0166638  5.0166638  c2  2.1345255  r2
```

The co-resource at time=5.0166638 is matched with the resource at time=2.1345255. Since the match time is equal to or less than the current time, the match is released from the system. Another co-resource arrives at time=8.1413418.

```
                    8.2544844   c2

                                               2.993211    r1
                                               3.453786    r2
                                               4.3641178   r2
                                               4.8334326   r1
                                               5.0866341   r2
                                               5.6643754   r1
                                               6.9911683   r2




        8.1413418   8.1413418   c2   2.5325145   r2
```

The co-resource at time=8.1413418 is matched with the resource at time=2.5325145 and the match is released from the system. Another co-resource arrives at time=8.2544844.

8.8377463   c1

2.993211   r1
4.8334326   r1
5.0866341   r2
5.6643754   r1
6.9911683   r2
8.4777979   r1
8.6265853   r2

8.2544844  82544844  c2 3.453786 r2

The co-resource at time=8.2544844 is matched with the resource at time=3.453786 and the match is released from the system. Another co-resource arrives at time=8.8377463.

9.3664004   c2

4.8334326   r1
5.0866341   r2
5.6643754   r1
6.9911683   r2
8.4777979   r1
8.6265853   r2
8.8591858   r1
8.8638217   r2
9.2137182   r1

8.8377463   8.8377463   c1   2.993211   r1

The co-resource at time=8.8377463 is matched with the resource at time=2.993211 and the match is released from the system. Another co-resource arrives at time=9.3664004.

| 9.3664004 | c2 | | | | | | |
|---|---|---|---|---|---|---|---|
| 9.3664004 | 9.3664004 | c2 | 5.0866341 | r2 | | 4.8334326 | r1 |
| 9.3664004 | 9.3664004 | c2 | 6.9911683 | r2 | | 5.0866341 | r2 |
| 9.3664004 | 9.3664004 | c2 | 8.6265853 | r2 | | 5.6643754 | r1 |
| 9.3664004 | 9.3664004 | c2 | 8.8638217 | r2 | | 6.9911683 | r2 |
| 10.3664004 | 9.3664004 | c2 | 4.8334326 | r1 | | 8.4777979 | r1 |
| 10.3664004 | 9.3664004 | c2 | 5.6643754 | r1 | | 8.6265853 | r2 |
| 10.3664004 | 9.3664004 | c2 | 8.4777979 | r1 | | 8.8591858 | r1 |
| 10.3664004 | 9.3664004 | c2 | 8.8591858 | r1 | | 8.8638217 | r2 |
| 10.3664004 | 9.3664004 | c2 | 9.2137182 | r1 | | 9.2137182 | r1 |

The co-resource at time=9.3664004 is matched with all of the resources.

| 9.6601721 | c2 | | | | | | |
|---|---|---|---|---|---|---|---|
| | | | | | | 4.8334326 | r1 |
| | | | | | | 5.6643754 | r1 |
| | | | | | | 6.9911683 | r2 |
| | | | | | | 8.4777979 | r1 |
| | | | | | | 8.6265853 | r2 |
| | | | | | | 8.8591858 | r1 |
| | | | | | | 8.8638217 | r2 |
| | | | | | | 9.2137182 | r1 |
| 9.3664004 | 9.3664004 | c2 | 5.0866341 | r2 | | | |

The co-resource at time=9.3664004 is matched with the resource at time=5.0866341 and the match is released from the system. Another co-resource arrives at time=9.6601721.

| 9.6601721 | c2 |
|---|---|

| 9.6601721 | 9.6601721 | c2 | 6.9911683 | r2 | 4.8334326 | r1 |
|---|---|---|---|---|---|---|
| 9.6601721 | 9.6601721 | c2 | 8.6265853 | r2 | 5.6643754 | r1 |
| 9.6601721 | 9.6601721 | c2 | 8.8638217 | r2 | 6.9911683 | r2 |
| 10.6601721 | 9.6601721 | c2 | 4.8334326 | r1 | 8.4777979 | r1 |
| 10.6601721 | 9.6601721 | c2 | 5.6643754 | r1 | 8.6265853 | r2 |
| 10.6601721 | 9.6601721 | c2 | 8.4777979 | r1 | 8.8591858 | r1 |
| 10.6601721 | 9.6601721 | c2 | 8.8591858 | r1 | 8.8638217 | r2 |
| 10.6601721 | 9.6601721 | c2 | 9.2137182 | r1 | 9.2137182 | r1 |

The co-resource at time=9.6601721 is matched with all of the resource.

| 9.7568613 | c2 |
|---|---|

| | 4.8334326 | r1 |
|---|---|---|
| | 5.6643754 | r1 |
| | 8.4777979 | r1 |
| | 8.6265853 | r2 |
| | 8.8591858 | r1 |
| | 8.8638217 | r2 |
| | 9.2137182 | r1 |

| 9.6601721 | 9.6601721 | c2 | 6.9911683 | r2 |
|---|---|---|---|---|

The co-resource at time=9.6601721 is matched with the resource at time=6.9911683 and the match is released from the system. Another co-resource arrives at time=9.7568613.

27

| 9.7568613 | c2 |
|---|---|

| 9.7568613 | 9.7568613 | c2 | 8.6265853 | r2 | 4.8334326 | r1 |
|---|---|---|---|---|---|---|
| 9.7568613 | 9.7568613 | c2 | 8.8638217 | r2 | 5.6643754 | r1 |
| 10.7568613 | 9.7568613 | c2 | 4.8334326 | r1 | 8.4777979 | r1 |
| 10.7568613 | 9.7568613 | c2 | 5.6643754 | r1 | 8.6265853 | r2 |
| 10.7568613 | 9.7568613 | c2 | 8.4777979 | r1 | 8.8591858 | r1 |
| 10.7568613 | 9.7568613 | c2 | 8.8591858 | r1 | 8.8638217 | r2 |
| 10.7568613 | 9.7568613 | c2 | 9.2137182 | r1 | 9.2137182 | r1 |

The co-resource at time=9.7568613 is matched with all of the resources.

| 10.110442 | r2 |
|---|---|

| 4.8334326 | r1 |
|---|---|
| 5.6643754 | r1 |
| 8.4777979 | r1 |
| 8.8591858 | r1 |
| 8.8638217 | r2 |
| 9.2137182 | r1 |

| 9.7568613 | 9.7568613 | c2 | 8.6265853 | r2 |
|---|---|---|---|---|

The co-resource at time=9.7568613 is matched with the resource at time=8.6265853 and the match is released from the system. Another resource arrives at time=10.110442.

| 11.311129 | c2 |
|---|---|

| | |
|---|---|
| 4.8334326 | r1 |
| 5.6643754 | r1 |
| 8.4777979 | r1 |
| 8.8591858 | r1 |
| 8.8638217 | r2 |
| 9.2137182 | r1 |
| 10.110442 | r2 |
| 11.079883 | r1 |
| 11.114974 | r2 |

The resource at time=10.110442 is added to the resource list. Another co-resource arrives at time=11.311129.

| 11.311129 | c2 |
|---|---|

| | | | | | |
|---|---|---|---|---|---|
| 11.311129 | 11.311129 | c2 | 8.8638217 | r2 | |
| 11.311129 | 11.311129 | c2 | 10.110442 | r2 | |
| 11.311129 | 11.311129 | c2 | 11.114974 | r2 | |
| 12.311129 | 11.311129 | c2 | 4.8334326 | r1 | |
| 12.311129 | 11.311129 | c2 | 5.6643754 | r1 | |
| 12.311129 | 11.311129 | c2 | 8.4777979 | r1 | |
| 12.311129 | 11.311129 | c2 | 8.8591858 | r1 | |
| 12.311129 | 11.311129 | c2 | 9.2137182 | r1 | |
| 12.311129 | 11.311129 | c2 | 11.079883 | r1 | |

| | |
|---|---|
| 4.8334326 | r1 |
| 5.6643754 | r1 |
| 8.4777979 | r1 |
| 8.8591858 | r1 |
| 8.8638217 | r2 |
| 9.2137182 | r1 |
| 10.110442 | r2 |
| 11.079883 | r1 |
| 11.114974 | r2 |

The co-resource at time=11.311129 is matched with all of the resources.

11.670576   r2

|  |  | 4.8334326 r1 |
|  |  | 5.6643754 r1 |
|  |  | 8.4777979 r1 |
|  |  | 8.8591858 r1 |
|  |  | 9.2137182 r1 |
|  |  | 10.110442 r2 |
|  |  | 11.079883 r1 |
|  |  | 11.114974 r2 |

11.311129   11.311129   c2   8.8638217   r2

The co-resource at time=11.311129 is matched with the resource at time=8.8638217 and the match is released from the system. Another resource arrives at time=11.670576.

11.762021   c1

|  |  | 4.8334326 r1 |
|  |  | 5.6643754 r1 |
|  |  | 8.4777979 r1 |
|  |  | 8.8591858 r1 |
|  |  | 9.2137182 r1 |
|  |  | 10.110442 r2 |
|  |  | 11.079883 r1 |
|  |  | 11.114974 r2 |
|  |  | 11.670576 r2 |

The resource at time=11.670576 is added to the list of resources. Another co-resources arrives at time=11.762021.

11.797395

|  |  |
|---|---|
|  | 5.6643754  r1 |
|  | 8.4777979  r1 |
|  | 8.8591858  r1 |
|  | 9.2137182  r1 |
|  | 10.110442  r2 |
|  | 11.079883  r1 |
|  | 11.114974  r2 |
|  | 11.670576  r2 |

11.762021    11.762021    c1    4.8334326    r1

The co-resource at time=11.762021 is matched with the resource at time=4.8334326 and the match is released from the system. Another co-resource arrives at time=11.797395.

12.385823    c1

|  |  |
|---|---|
|  | 8.4777979  r1 |
|  | 8.8591858  r1 |
|  | 9.2137182  r1 |
|  | 10.110442  r2 |
|  | 11.079883  r1 |
|  | 11.114974  r2 |
|  | 11.670576  r2 |

11.797395    11.797395

The co-resource at time=11.797395 is matched with the resource at time=5.6643754 and the match is released from the system. Another co-resource arrives at time=12.385823.

12.741517   c1

|  |  | 8.8591858   r1 |
|  |  | 9.2137182   r1 |
|  |  | 10.110442   r2 |
|  |  | 11.079883   r1 |
|  |  | 11.114974   r2 |
|  |  | 11.670576   r2 |

12.385823     12.385823   c1   8.4777979   r1

The co-resource at time=12.385823 is matched with the resource at time=8.4777979 and the match is released from the system. Another co-resource arrives at time=12.741517 and the process continues.

Example 2.

Here are tables summarizing an example of tempered matching in a simple scenario. This example scenario can be thought to represent the following situation. The resources represent customer service agents. The co-resources represent customers. Suppose there are two kinds of agents, r1 and r2, and two kinds of customers, c1 and c2, so that there are four (possibly distinct types of) *signatures* for a *virtual autonomous tempo:* f[c1,r1], f[c1,r2], f[c2,r1], and f[c2,r2]. Suppose the agent skills and the customer requirements are such that any type of agent can handle any type of customer, but for some other business reason (say profit or customer satisfaction) it is better to match r1 with c1 and r2 with c2 than to match r1 with c2 and r2 with c1. However, the business is unwilling to violate a "First come first matched" rule for either resources or co-resources unless the better and worse of the "first come" options for a match both arrived at the same or *imperceptibly* different times.

This business rule may be captured with tempered matching by an appropriate choice of the four *signatures*. For this example, the following signatures will suffice to enforce the rule:

$$f[c1,r1] \ (h) = -|h|;$$

$$f[c2,r2] \ (h) = -|h|;$$

$$f[c1,r2) \ (h) = -|h| + .0001;$$

$$f[c2,r1] \ (h) = -|h| + .0001;$$

where .0001 is assumed to be an *imperceptible* duration of time, and |h| denotes the *absolute value* of h. That is, |h| = h when h >0, |h| =0 when h=0, and |h| =-h when h <0.

The signature f[c1,r1] (h) = -|h| simply means that the tempo establishes the match c1 and r1 at the time which is the minimum of the arrival times of c1 and r1. The signature f[c1,r2) (h) = -|h| + .0001 simply means that the tempo establishes the match between c1 and r2 an imperceptible duration of time after the minimum of the arrival times of c1 and r2. Note that nearly all matches will be established at a time prior to the release time; such matches are called *virtual* so this is an example of a virtual tempo.

This matching strategy is a generalization of a simple "first come, first matched" strategy, and becomes that strategy when the *imperceptible* time delay is set to zero.

In this scenario it is assumed there are two types of resources, {r1, r2}, and two types of co-resources, {c1, c2}.

The *tempo* of the matching process establishes a match between either c1 and r1 or c2 and r2 at the arrival time of the earlier member of either pair and establishes a match between either c1 and r2 or c2 and r1 at the arrival time of the earlier member of either *pair plus* an *imperceptible* amount of time = .0001.

The arrival times of resources and co-resources are determined by some stochastic process. In this example, each type of resource and co-resource is assumed to follow an exponential distribution with mean =1. That is, for each of the four types, the distribution of time-intervals between consecutive arrivals is given by the density p(t)dt = exp(-t) dt.

Here is a list of a sample of 100 consecutive arrival times generated by a Monte Carlo method with those assumptions. The time of arrival is on the left and the type of *source* is identified on the right.

| arrival time | source type |
|---|---|
| 0.042928 | c2 |
| 0.249506 | r2 |
| 0.371596 | c1 |
| 0.433842 | c2 |
| 0.589141 | r2 |
| 0.807903 | c2 |
| 0.83801 | c1 |
| 0.968663 | c2 |
| 1.001723 | c2 |
| 1.068477 | c1 |
| 1.286729 | c2 |
| 1.534043 | r2 |
| 1.663302 | c2 |
| 1.838071 | r2 |
| 1.960352 | r2 |
| 2.013645 | c2 |
| 2.049782 | r2 |
| 2.169273 | r1 |
| 2.39788 | r1 |
| 2.649639 | c2 |
| 3.268107 | r1 |
| 3.857108 | c2 |
| 4.041022 | r1 |
| 4.256424 | c1 |
| 4.811069 | c1 |
| 5.043924 | c1 |
| 5.123358 | r1 |
| 5.702893 | r2 |
| 6.31861 | r2 |
| 6.470296 | r1 |
| 6.528541 | r2 |
| 6.802993 | c1 |
| 7.422036 | r2 |
| 7.444997 | c2 |
| 7.553016 | r2 |
| 8.010046 | c1 |

(continued)

| arrival time | source type |
| --- | --- |
| 8.053091 | r1 |
| 8.220647 | c1 |
| 8.442376 | r2 |
| 8.647934 | c2 |
| 8.804856 | r1 |
| 8.873924 | c1 |
| 8.888056 | r2 |
| 8.924643 | r1 |
| 9.023222 | r2 |
| 9.138262 | c1 |
| 9.501833 | r1 |
| 9.618368 | c2 |
| 9.70084 | c2 |
| 10.15748 | c2 |
| 10.25302 | c1 |
| 11.042 | c1 |
| 11.30029 | r1 |
| 12.04425 | c1 |
| 12.13976 | c2 |
| 12.28182 | c2 |
| 12.91851 | r1 |
| 13.9176 | r1 |
| 13.9322 | r2 |
| 14.21482 | c1 |
| 14.3767 | r2 |
| 14.56647 | c2 |
| 14.65429 | c2 |
| 14.88141 | r2 |
| 15.40349 | r1 |
| 15.44298 | c2 |
| 15.72483 | c1 |
| 16.658 | r2 |
| 17.87847 | c1 |
| 17.95095 | r1 |
| 17.9912 | c2 |
| 18.33995 | r2 |
| 18.59353 | c2 |
| 18.61976 | c2 |
| 18.69767 | c1 |
| 19.32182 | r2 |
| 19.32814 | r1 |
| 20.44867 | r2 |
| 20.56588 | c2 |
| 20.89851 | r1 |
| 20.99274 | r2 |
| 21.04426 | c1 |
| 21.53672 | c2 |
| 21.70282 | r2 |
| 22.11804 | r2 |
| 22.65673 | r1 |

(continued)

| arrival time | source type |
|---|---|
| 22.82679 | r1 |
| 22.97665 | r2 |
| 22.98755 | c1 |
| 23.05824 | r1 |
| 23.38639 | c2 |
| 23.80656 | c1 |
| 23.88005 | r2 |
| 23.91176 | r2 |
| 24.20692 | c2 |
| 24.64706 | c1 |
| 24.94445 | c1 |
| 25.08334 | c2 |
| 25.10166 | c1 |
| 25.24123 | c1 |

A tempered matching algorithm was run against this sequence of sources using the given tempo. Here is a table showing the times and types of the released matches, up to the time of the arrival of the 100th source. The last column indicates the quality of the match. In this sample, of 47 matches, 22 were of better quality and 25 were of worse quality. It is believed that this is not significantly different from random matching. The reader should not surprised to observe that this "first come, first matched" strategy may not yield significant improvements in the quality of matches. The point of this example is to show that tempered matching is powerful enough to express a generalized "first come, first matched" matching strategy. Other choices of tempo do lead to significant improvements in the quality of matches.

Also note that in these *virtual* matches, the time of release is after the time of establishment and that the time of establishment is before the arrival of both resources

| time of release | time of match establishment | co-resource arrival time | co-resource type | resource arrival time | resource type | quality of match |
|---|---|---|---|---|---|---|
| 0.249506 | 0.042928 | 0.042928 | c2 | 0.249506 | r2 | 1 |
| 0.589141 | 0.371696 | 0.371596 | c1 | 0.589141 | r2 | 0 |
| 1.534043 | 0.433842 | 0.433842 | c2 | 1.534043 | r2 | 1 |
| 1.838071 | 0.807903 | 0.807903 | c2 | 1.838071 | r2 | 1 |
| 1.960352 | 0.83811 | 0.83801 | c1 | 1.960352 | r2 | 0 |
| 2.049782 | 0.968663 | 0.968663 | c2 | 2.049782 | r2 | 1 |
| 2.169273 | 1.001823 | 1.001723 | c2 | 2.169273 | r1 | 0 |
| 2.39788 | 1.068477 | 1.068477 | c1 | 2.39788 | r1 | 1 |
| 3.268107 | 1.286829 | 1.286729 | c2 | 3.268107 | r1 | 0 |
| 4.041022 | 1.663402 | 1.663302 | c2 | 4.041022 | r1 | 0 |
| 5.123358 | 2.013745 | 2.013645 | c2 | 5.123358 | r1 | 0 |
| 5.702893 | 2.649639 | 2.649639 | c2 | 5.702893 | r2 | 1 |
| 6.31861 | 3.857108 | 3.857108 | c2 | 6.31861 | r2 | 1 |
| 6.470296 | 4.256424 | 4.256424 | c1 | 6.470296 | r1 | 1 |
| 6.528541 | 4.811169 | 4.811069 | c1 | 6.528541 | r2 | 0 |
| 7.422036 | 5.044024 | 5.043924 | c1 | 7.422036 | r2 | 0 |
| 7.553016 | 6.803093 | 6.802993 | c1 | 7.553016 | r2 | 0 |
| 8.053091 | 7.445097 | 7.444997 | c2 | 8.053091 | r1 | 0 |
| 8.442376 | 8.010146 | 8.010046 | c1 | 8.442376 | r2 | 0 |
| 8.804856 | 8.220647 | 8.220647 | c1 | 8.804856 | r1 | 1 |
| 8.888056 | 8.647934 | 8.647934 | c2 | 8.888056 | r2 | 1 |
| 8.924643 | 8.873924 | 8.873924 | c1 | 8.924643 | r1 | 1 |
| 9.138262 | 9.023322 | 9.138262 | c1 | 9.023222 | r2 | 0 |
| 9.618368 | 9.501933 | 9.618368 | c2 | 9.501833 | r1 | 0 |

(continued)

| time of release | time of match establishment | co-resource arrival time | co-resource type | resource arrival time | resource type | quality of match |
|---|---|---|---|---|---|---|
| 11.30029 | 9.70094 | 9.70084 | c2 | 11.30029 | r1 | 0 |
| 12.91851 | 10.15758 | 10.15748 | c2 | 12.91851 | r1 | 0 |
| 13.9176 | 10.25302 | 10.25302 | c1 | 13.9176 | r1 | 1 |
| 13.9322 | 11.0421 | 11.042 | c1 | 13.9322 | r2 | 0 |
| 14.3767 | 12.04435 | 12.04425 | c1 | 14.3767 | r2 | 0 |
| 14.88141 | 12.13976 | 12.13976 | c2 | 14.88141 | r2 | 1 |
| 15.40349 | 12.28192 | 12.28182 | c2 | 15.40349 | r1 | 0 |
| 16.658 | 14.21492 | 14.21482 | c1 | 16.658 | r2 | 0 |
| 17.95095 | 14.56657 | 14.56647 | c2 | 17.95095 | r1 | 0 |
| 18.33995 | 14.65429 | 14.65429 | c2 | 18.33995 | r2 | 1 |
| 19.32182 | 15.44298 | 15.44298 | c2 | 19.32182 | r2 | 1 |
| 19.32814 | 15.72483 | 15.72483 | c1 | 19.32814 | r1 | 1 |
| 20.44867 | 17.87857 | 17.87847 | c1 | 20.44867 | r2 | 0 |
| 20.89851 | 17.9913 | 17.9912 | c2 | 20.89851 | r1 | 0 |
| 20.99274 | 18.59353 | 18.59353 | c2 | 20.99274 | r2 | 1 |
| 21.70282 | 18.61976 | 18.61976 | c2 | 21.70282 | r2 | 1 |
| 22.11804 | 18.69777 | 18.69767 | c1 | 22.11804 | r2 | 0 |
| 22.65673 | 20.56598 | 20.56588 | c2 | 22.65673 | r1 | 0 |
| 22.82679 | 21.04426 | 21.04426 | c1 | 22.82679 | r1 | 1 |
| 22.97665 | 21.53672 | 21.53672 | c2 | 22.97665 | r2 | 1 |
| 23.05824 | 22.98755 | 22.98755 | c1 | 23.05824 | r1 | 1 |
| 23.88005 | 23.38639 | 23.38639 | c2 | 23.88005 | r2 | 1 |
| 23.91176 | 23.80666 | 23.80656 | c1 | 23.91176 | r2 | 0 |

After the arrival of the 100th source, the following co-resources were still waiting in the system.

| arrival time | co-resource type |
|---|---|
| 24.20692 | c2 |
| 24.64706 | c1 |
| 24.94445 | c1 |
| 25.08334 | c2 |
| 25.10166 | c1 |
| 25.24123 | c1 |

After the arrival of the 100th source, no resources were still waiting in the system.

| arrival time | resource type |
|---|---|

Example 3.

Below are tables summarizing an example of tempered matching in a simple scenario. This example scenario can be thought to represent the following situation. The resources represent customer service agents. The co-resources represent customers. Suppose there are two kinds of agents, r1 and r2, and two kinds of customers, c1 and c2, so that there are four (possibly distinct types of) *signatures* for a *virtual autonomous tempo:* f[c1,r1], f[c1,r2], f[c2,r1], and f[c2,r2]. Suppose the agent skills and the customer requirements are such that any type of agent can handle any type of customer, but for some other business reason (say profit or customer satisfaction) it is better to match r1 with c1 and r2 with c2 than to match r1 with c2 and r2 with c1. The business is willing to delay the release of matches in order to obtain a higher quality of released matches. However the business also wants to be certain that any available customer or agent eventually will be matched (assuming the complementary sources continue to arrive.) This can be assured by an appropriate choice of tempo.

This business constraint may be captured with tempered matching by an appropriate choice of the four *signatures.* For this example, the following signatures will suffice to enforce the constraints.

$$f[c1,r1] \ (h) = -|h|;$$

$$f[c2,r2] \ (h) = -|h|;$$

$$f[c1,r2) \ (h) = -|h| + 4* \ \exp(-.05*|h|);$$

$$f[c2,r1] \ (h) = -|h| + 4* \ \exp(-.05*|h|);$$

Here, |h| denotes the *absolute value* of h. That is, |h| = h when h >0, |h| =0 when h=0, and |h| =-h when h <0. Also, * denotes multiplication and exp( ) denotes the exponential function.

The signature f[c1,r1] (h) = -|h| simply means that the tempo establishes the match c1 and r1 at the time which is the minimum of the arrival times of c1 and r1. The signature f[c1,r2) (h) = -|h| + 4* exp(-.05*|h|) simply means that the tempo establishes the match between c1 and r2 a duration of time after the minimum of the arrival times of c1 and r2, which duration decreases exponentially with the magnitude of the difference in arrival times of the matched pair. In effect, if either a resource or a co-resource has been in the system for a long time, the next match will treat it as if the tempo were "first come, first matched." This means all old, "stagnant" sources are eventually released from the system. Note that these stagnant matches will be established at a time prior to the release time; such matches are called *virtual* so this is an example of a virtual tempo. On the other hand, when sources have not been in the system too long, the better matches will be preferentially released. This non-trivial tempo illustrates some of the utility of tempered matching.

In this scenario it is assumed there are two types of resources, {r1, r2}, and two types of co-resources, {c1, c2}. The *tempo* of the matching process establishes a match between either c1 and r1 or c2 and r2 at the arrival time of the earlier member of either pair and establishes a match between either c1 and r2 or c2 and r1 at the arrival time of the earlier member of either pair *plus* an amount of time, 4* exp(-.05*|h|). Here, h is the difference between the arrival times the matched sources.

The arrival times of resources and co-resources are determined by some stochastic process. In this example, each type of resource and co-resource is assumed to follow an exponential distribution with mean =1. That is, for each of the four types, the distribution of time-intervals between consecutive arrivals is given by the density p(t)dt = exp(-t) dt.

Here is a list of a sample of 100 consecutive arrival times generated by a Monte Carlo method with those assumptions. The time of arrival is on the left and the type of *source* is identified on the right.

| arrival time | Source type |
|---|---|
| 0.404804 | c2 |
| 0.762349 | c2 |
| 0.952918 | c2 |
| 1.392416 | c1 |
| 1.451601 | r1 |
| 1.71655 | c2 |
| 1.817777 | r1 |
| 2.337482 | c2 |
| 2.440255 | c2 |
| 2.927266 | r1 |
| 3.049661 | r2 |
| 3.113185 | r2 |
| 3.12546 | c2 |

(continued)

| arrival time | Source type |
| --- | --- |
| 3.177983 | c1 |
| 3.387774 | r1 |
| 3.452037 | c1 |
| 3.523785 | c2 |
| 3.639242 | r1 |
| 4.520267 | r1 |
| 4.661559 | c1 |
| 5.096771 | c1 |
| 5.416633 | c2 |
| 5.592547 | c1 |
| 5.683046 | c2 |
| 5.718997 | r2 |
| 5.954647 | r1 |
| 6.057777 | r2 |
| 6.074386 | r1 |
| 6.121819 | c1 |
| 6.267114 | c1 |
| 6.352792 | r2 |
| 6.663779 | c2 |
| 6.898102 | r1 |
| 6.918922 | c2 |
| 6.964093 | r1 |
| 7.564111 | r2 |
| 8.548178 | r2 |
| 8.644642 | c2 |
| 9.113325 | c2 |
| 9.171768 | c1 |
| 9.774522 | c2 |
| 9.860555 | r1 |
| 10.22316 | c1 |
| 10.24486 | r1 |
| 10.25982 | r2 |
| 10.48102 | c1 |
| 10.63143 | c1 |
| 11.00394 | r2 |
| 11.12297 | r2 |
| 11.26818 | r1 |
| 11.58691 | c2 |
| 11.88026 | c2 |
| 11.94214 | c1 |
| 11.99895 | r1 |
| 12.17056 | r2 |
| 12.30375 | c1 |
| 12.32587 | r2 |
| 12.67117 | r1 |
| 12.91287 | r2 |
| 12.96408 | r2 |
| 13.35134 | r1 |
| 13.49145 | r2 |
| 13.58396 | r1 |

(continued)

| arrival time | Source type |
|---|---|
| 13.94795 | c1 |
| 14.19556 | r1 |
| 14.39441 | r2 |
| 14.41641 | r1 |
| 14.50512 | c2 |
| 14.73257 | r2 |
| 15.04533 | c2 |
| 15.13717 | c1 |
| 15.18514 | c2 |
| 15.22484 | r1 |
| 15.71128 | c2 |
| 15.77047 | r1 |
| 15.81998 | c2 |
| 16.00761 | c2 |
| 16.65024 | c2 |
| 17.48723 | c2 |
| 17.75969 | r1 |
| 17.82047 | r1 |
| 17.957 | r2 |
| 18.44261 | r2 |
| 18.54069 | c1 |
| 18.94428 | r1 |
| 19.15081 | r1 |
| 19.31874 | r2 |
| 19.56603 | r2 |
| 19.80825 | c1 |
| 20.37752 | c2 |
| 20.73721 | r1 |
| 20.86991 | r2 |
| 20.89157 | c2 |
| 21.05147 | c1 |
| 21.12744 | r2 |
| 21.20436 | r2 |
| 21.72226 | c1 |
| 22.26864 | r2 |
| 22.29271 | r1 |
| 22.79978 | r2 |

A tempered matching algorithm was run against this sequence of sources using the given tempo. Below is a table showing the times and types of the released matches, up to the time of the arrival of the 100th source. The last column indicates the quality of the match. In this sample, of 47 matches 43 were of better quality and 4 were of worse quality. I venture this is significantly different from random matching.

Also note that many but not all of these matches are *virtual* matches, the time of release is after or at the time of establishment, and that the time of establishment may be before or after the arrival times of both resources.

| time of release | time of match establishment | co-resource arrival time | co-resource type | resource arrival time | resource type | quality of match |
|---|---|---|---|---|---|---|
| 1.451601 | 1.392416 | 1.392416 | c1 | 1.451601 | r1 | 1 |
| 3.049661 | 0.404804 | 0.404804 | c2 | 3.049661 | r2 | 1 |
| 3.113185 | 0.762349 | 0.762349 | c2 | 3.113185 | r2 | 1 |

(continued)

| time of release | time of match establishment | co-resource arrival time | co-resource type | resource arrival time | resource type | quality of match |
|---|---|---|---|---|---|---|
| 3.177983 | 1.817777 | 3.177983 | c1 | 1.817777 | r1 | 1 |
| 3.452037 | 2.927266 | 3.452037 | c1 | 2.927266 | r1 | 1 |
| 4.450172 | 4.450172 | 0.952918 | c2 | 3.639242 | r1 | 0 |
| 4.661559 | 3.387774 | 4.661559 | c1 | 3.387774 | r1 | 1 |
| 5.096771 | 4.520267 | 5.096771 | c1 | 4.520267 | r1 | 1 |
| 5.718997 | 1.71655 | 1.71655 | c2 | 5.718997 | r2 | 1 |
| 5.954647 | 5.592547 | 5.592547 | c1 | 5.954647 | r1 | 1 |
| 6.057777 | 2.337482 | 2.337482 | c2 | 6.057777 | r2 | 1 |
| 6.074386 | 5.775639 | 2.440255 | c2 | 6.074386 | r1 | 0 |
| 6.352792 | 3.12546 | 3.12546 | c2 | 6.352792 | r2 | 1 |
| 6.898102 | 6.121819 | 6.121819 | c1 | 6.898102 | r1 | 1 |
| 6.964093 | 6.267114 | 6.267114 | c1 | 6.964093 | r1 | 1 |
| 7.564111 | 3.523785 | 3.523785 | c2 | 7.564111 | r2 | 1 |
| 8.548178 | 5.416633 | 5.416633 | c2 | 8.548178 | r2 | 1 |
| 9.860555 | 8.929031 | 5.683046 | c2 | 9.860555 | r1 | 0 |
| 10.24486 | 9.171768 | 9.171768 | c1 | 10.24486 | r1 | 1 |
| 10.25982 | 6.663779 | 6.663779 | c2 | 10.25982 | r2 | 1 |
| 11.00394 | 6.918922 | 6.918922 | c2 | 11.00394 | r2 | 1 |
| 11.12297 | 8.644642 | 8.644642 | c2 | 11.12297 | r2 | 1 |
| 11.26818 | 10.22316 | 10.22316 | c1 | 11.26818 | r1 | 1 |
| 11.99895 | 10.48102 | 10.48102 | c1 | 11.99895 | r1 | 1 |
| 12.17056 | 9.113325 | 9.113325 | c2 | 12.17056 | r2 | 1 |
| 12.32587 | 9.774522 | 9.774522 | c2 | 12.32587 | r2 | 1 |
| 12.67117 | 10.63143 | 10.63143 | c1 | 12.67117 | r1 | 1 |
| 12.91287 | 11.58691 | 11.58691 | c2 | 12.91287 | r2 | 1 |
| 12.96408 | 11.88026 | 11.88026 | c2 | 12.96408 | r2 | 1 |
| 13.35134 | 11.94214 | 11.94214 | c1 | 13.35134 | r1 | 1 |
| 13.58396 | 12.30375 | 12.30375 | c1 | 13.58396 | r1 | 1 |
| 14.19556 | 13.94795 | 13.94795 | c1 | 14.19556 | r1 | 1 |
| 14.50512 | 13.49145 | 14.50512 | c2 | 13.49145 | r2 | 1 |
| 15.04533 | 14.39441 | 15.04533 | c2 | 14.39441 | r2 | 1 |
| 15.13717 | 14.41641 | 15.13717 | c1 | 14.41641 | r1 | 1 |
| 15.18514 | 14.73257 | 15.18514 | c2 | 14.73257 | r2 | 1 |
| 17.957 | 15.71128 | 15.71128 | c2 | 17.957 | r2 | 1 |
| 18.44261 | 15.81998 | 15.81998 | c2 | 18.44261 | r2 | 1 |
| 18.54069 | 15.22484 | 18.54069 | c1 | 15.22484 | r1 | 1 |
| 19.31874 | 16.00761 | 16.00761 | c2 | 19.31874 | r2 | 1 |
| 19.44144 | 19.44144 | 17.48723 | c2 | 15.77047 | r1 | 0 |
| 19.56603 | 16.65024 | 16.65024 | c2 | 19.56603 | r2 | 1 |
| 19.80825 | 17.75969 | 19.80825 | c1 | 17.75969 | r1 | 1 |
| 20.86991 | 20.37752 | 20.37752 | c2 | 20.86991 | r2 | 1 |
| 21.05147 | 17.82047 | 21.05147 | c1 | 17.82047 | r1 | 1 |
| 21.12744 | 20.89157 | 20.89157 | c2 | 21.12744 | r2 | 1 |
| 21.72226 | 18.94428 | 21.72226 | c1 | 18.94428 | r1 | |

After the arrival of the 100th source, the following co-resources were still waiting in the system.

| arrival time | co-resource type |
|---|---|

After the arrival of the 100th source, no resources were still waiting in the system.

| Arrival time | resource type |
|---|---|
| 19.15081 | r1 |
| 20.73721 | r1 |
| 21.20436 | r2 |
| 22.26864 | r2 |
| 22.29271 | r1 |
| 22.79978 | r2 |

A specific embodiment of method and apparatus for matching resources and co-resources has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

**Claims**

1. A method of matching resources and co-resources within a system, the method comprising:

   providing a plurality of resources and co-resources where a first type of resource of the plurality of resources are preferentially matched with a first type of co-resource of the plurality of co-resources and a second type of resource of the plurality of resources is preferentially matched with a second type of co-resource of the plurality of co-resources and where any match between a resource of the first type and a co-resource of the second type or a resource of the second type and co-resource of the first type is a non-preferential match;
   matching each of the plurality of resources with each respective co-resource of the plurality of co-resources;
   forming a tempered match from each matched resource and co-resource by associating a time of the match with the match;
   ordering the tempered matches based upon the associated time; and
   releasing at least some of the tempered matches for use within the system based upon the ordering of the tempered matches.

2. The method of matching resources and co-resources as in claim 1 further comprising forming a list of tempered matches.

3. The method of matching resources as in claim 2 further comprising determining the associated time of any match by the evaluation of a predetermined function whose value depends on the current time in the system, the times of arrival of the matched resource and co-resource, and other properties of the matched resource and co-resource, including their types.

4. The method of matching resources as in claim 3 further comprising ordering the tempered matches within the formed list based first upon the adjusted associated times of the tempered matches and second upon the detected times of arrival of the resource and co-resources of the respective tempered matches.

5. The method of matching resources and co-resources as in claim 4 further comprising releasing the at least some of the tempered matches for use within the system when a current time equals or exceeds the adjusted associated time of the at least some tempered matches.

6. The method of matching resources as in claim 5 further comprising deleting any released tempered pair from the ordered list.

7. The method of matching resources as in claim 6 further comprising forming a list of detected resources and a list of detected co-resources.

8. The method of matching resources and co-resources as in claim 7 further comprising deleting from the ordered list any tempered match with a co-resource type identical to any released tempered match.

9. The method of matching resources and co-resources as in claim 7 further comprising deleting from the ordered list any tempered match with a resource type identical to any released tempered match.

10. The method of matching resources and co-resources as in claim 7 further comprising deleting from the list of detected co-resources any co-resource of a type identical to the co-resource of any released tempered match.

11. The method of matching resources and co-resources as in claim 7 further comprising deleting from the list of detected resources any resource of a type identical to the resource of any released tempered match.

12. The method of matching resources and co-resources as in claim 3 further comprising calculating the predetermined time interval for each match based upon a quality of the match.

13. An apparatus for matching resources and co-resources within a system, the method comprising:

means for providing a plurality of resources and co-resources where a first type of resource of the plurality of resources are preferentially matched with a first type of co-resource of the plurality of co-resources and a second type of resource of the plurality of resources is preferentially matched with a second type of co-resource of the plurality of co-resources and where any match between a resource of the first type and a co-resource of the second type or a resource of the second type and co-resource of the first type is a non-preferential match;
means for detecting a time of availability of each resource of the plurality of resources and each co-resource of the plurality of resources to the system;
means for matching each of the detected resources with each respective detected co-resource;
means for forming a tempered match from each matched resource and co-resource by associating a time of the match with the match;
means for ordering the tempered matches based upon the associated time; and
means for releasing at least some of the tempered matches for use within the system based upon the ordering of the tempered matches.

14. The apparatus for matching resources as in claim 13 further comprising means for incrementing the associated time of each non-preferential match of the tempered matches by a predetermined time to form an adjusted associated time for the tempered matches.

15. The apparatus for matching resources as in claim 13 further comprising ordering the tempered matches within an ordered list based first upon the adjusted associated times of the tempered matches and second upon the detected times of arrival of the resource and co-resources of the respective tempered matches.

16. The apparatus for matching resources as in claim 15 further comprising means for releasing at least some of the tempered matches for use within the system when a current time equals or exceeds the adjusted associated time of the at least some tempered matches.

17. The apparatus for matching resources as in claim 15 further comprising deleting any released tempered pair from the ordered list.

18. The apparatus for matching resources as in claim 15 further comprising forming a list of detected resources and a list of detected co-resources.

19. The apparatus for matching resources and co-resources as in claim 18 further comprising deleting from the ordered list any tempered match with a co-resource type identical to any released tempered match.

20. The apparatus for matching resources and co-resources as in claim 18 further comprising deleting from the ordered list any tempered match with a resource type identical to any released tempered match.

21. The apparatus for matching resources and co-resources as in claim 18 further comprising deleting from the list of detected co-resources any co-resource of a type identical to the co-resource of any released tempered match.

**22.** The apparatus for matching resources and co-resources as in claim 18 further comprising deleting from the list of detected resources any resource of a type identical to the resource of any released tempered match.

**23.** The apparatus for matching resources and co-resources as in claim 19 further comprising deleting from the list of detected resources any resource of a type identical to the resource of any released tempered match.

**24.** The apparatus for matching resources and co-resources as in claim 14 further comprising calculating the predetermined time interval for each match based upon a quality of the match.

**25.** An apparatus for matching resources and co-resources within a system, the method comprising:

a plurality of resources and co-resources where a first type of resource of the plurality of resources are preferentially matched with a first type of co-resource of the plurality of co-resources and a second type of resource of the plurality of resources is preferentially matched with a second type of co-resource of the plurality of co-resources and where any match between a resource of the first type and a co-resource of the second type or a resource of the second type and co-resource of the first type is a non-preferential match;
an arrival processor that detects a time of availability of each resource of the plurality of resources and each co-resource of the plurality of resources to the system;
a matching processor that matches each of the detected resources with each respective detected co-resource;
a tempering processor that forms a tempered match from each matched resource and co-resource by associating a time of the match with the match;
an ordering processor that orders the tempered matches based upon the associated time and
a release processor that releases at least some of the ordered tempered matches based upon the ordering of the tempered matches.

**26.** The apparatus for matching resources as in claim 25 further comprising a signature processor that adjusts the associated time of each non-preferential match of the tempered matches by a predetermined time value.

**27.** The apparatus for matching resources as in claim 26 wherein the release processor releases at least some of the tempered matches for use within the system when a current time equals or exceeds the associated time of the at least some tempered matches.

**28.** The apparatus for matching resources as in claim 26 wherein the tempered matches further comprises an ordered list based first upon the associated times of the tempered matches and second upon the detected times of arrival of the resource and co-resources of the respective tempered matches.

**29.** The apparatus for matching resources as in claim 28 wherein the arrival processor further comprises a resource list and a co-resource list into which the arrival processor places resources and co-resources, respectively.

**30.** The apparatus for matching resources as in claim 29 further comprising a list editor routine that deletes any entries from the ordered list of tempered matches, the resource list and co-resource that match any resource and co-resource of a released tempered match.

**31.** The apparatus for matching resources as in claim 28 wherein the release processor increments the associated time by the predetermined time value when a tempered match are of different types.

# Fig. 1

**Fig. 2**

h'

h

r arrives after c | c arrives after r

**Fig. 3**

h'

h

r arrives after c | c arrives after r

**Fig. 4**

h'

h

r arrives after c | c arrives after r

**Fig. 5**

h'

h

r arrives after c | c arrives after r

**Fig. 6**

h'

h

r arrives after c | c arrives after r

**Fig. 7**

h'

h

r arrives after c | c arrives after r

**Fig. 8**

h'

w

u    v    h

r arrives after c | c arrives after r